# EUROPEAN PATENT APPLICATION

(11) **EP 0 693 630 A2**
(43) Date of publication of application: **24.01.1996**
(21) Application number: 95303897.3
(22) Date of filing: 07.06.1995
(51) Int. Cl.: F16C 39/06

(54) **Magnetic thrust bearing**

(30) Priority: 18.07.1994 US 276585
(71) Applicant: GENERAL ELECTRIC COMPANY, Schenectady, NY 12345 (US)
(72) Inventor: Preston, Mark Alan, Niskayuna, New York 12309 (US); Lyons, James Patrick Francis, Niskayuna, New York 12309 (US)
(74) Representative: Pratt, Richard Wilson

(57) **Abstract**

An active magnetic bearing for magnetically supporting a rotating shaft against axially-directed thrust loads includes a circumscribing, radially-extending disc (74) on the shaft (62) and first (66,68) and second sets (70,72) of annular electromagnets circumscribing the shaft on opposite sides of the disc. The first set (66,68) of electromagnets generates a first magnetic field coupled to the disc (74) at a first selected radius from the shaft, the magnetic field having axially-directed components for suspending the disc generally at a predetermined position between the first electromagnets. The second set (70,72) of electromagnets generates a second magnetic field coupled to the disc at a second selected radius from the shaft and displaced from the first magnetic field. The second magnetic field has axially-directed components for suspending the rotor (62) generally at the same predetermined position as the first set of electromagnets. A nonmagnetic sleeve (80) circumscribes the second set of electromagnets for magnetically isolating the first field from the second field.

## Description

### RELATED PATENT APPLICATIONS

This application is related to commonly assigned U.S. Patent US-A-5300843 filed November 2, 1992, of J.P. Lyons, M.A. Preston and G.B. Kliman, the disclosure of which is hereby incorporated by reference, and to our commonly assigned U.S. Patent Application, S.N. (docket RD-22,353) a copy of which is available in the Dossier of the present European Patent Application.

### FIELD OF THE INVENTION

The present invention relates generally to magnetic bearings and, more Particularly, to a fault tolerant magnetic thrust bearing.

### BACKGROUND OF THE INVENTION

Active magnetic bearings have great potential for improving the efficiency of rotating machinery by: reducing or eliminating complexity of bearing lubrication systems; enabling high rotational speeds; and Providing active means of controlling vibrations in complex rotating masses. Recent advances in power electronics and control microprocessors have made active magnetic bearing systems feasible in, for example, gas turbine engine applications.

Presently, however, active magnetic bearings are unsuitable for high-reliability applications, such as aircraft engine rotor support and vibration control. Accordingly, it is desirable to provide a highly reliable and fault tolerant active magnetic bearing.

### SUMMARY OF THE INVENTION

An object of the present invention is to provide an active magnetic thrust bearing.

Another object is to provide a fault tolerant active magnetic thrust bearing.

In an exemplary form the invention contemplates an active magnetic thrust bearing having a rotor mounted for rotation about an axis with a radially-extending rotor disc of magnetically permeable material attached to the rotor. A first annular electromagnet circumscribes the rotor and is juxtaposed with the rotor disc on a first side thereof. A second annular electromagnet circumscribes the rotor and is juxtaposed with the rotor disc on a second side thereof. The second electromagnet is oriented axially facing the first electromagnet such that magnetic fields produced by the first and second electromagnets are coupled through the rotor disc for suspending the disc between the electromagnets. A third annular electromagnet is positioned between the first electromagnet and the rotor and juxtaposed with the rotor disc and a fourth annular electromagnet is positioned between the second electromagnet and the rotor and juxtaposed with the rotor disc. The fourth electromagnet is oriented axially facing the third electromagnet with the third and fourth electromagnets being operative to suspend the disc for rotation therebetween. Preferably, nonmagnetic sleeve barriers circumscribe each of the third and fourth electromagnets for magnetically isolating the third and fourth electromagnets from the first and second electromagnets so that the bearing remains operative even if one pair of the electromagnets fails.

### BRIEF DESCRIPTION OF THE DRAWINGS

The features of the invention believed to be novel are set forth with particularity in the appended claims. The invention itself, however, both as to organization and method of operation, together with further objects and advantages thereof, may best be understood by reference to the following description taken in conjunction with the accompanying drawing(s) in which:
FIG. 1a is a simplified cross-sectional view of a typical active radial magnetic bearing employing orthogonal control axes;
FIG. 1b graphically represents the orthogonal control axes for the active magnetic bearing of FIG. 1a;
FIG. 2a is a simplified cross-sectional view of an active radial magnetic bearing employing three magnetically isolated control axes;
FIG. 2b graphically represents the magnetically isolated control axes for the active magnetic bearing of FIG. 2a;
FIG. 3 is a simplified cross-sectional view of a non-fault tolerant active magnetic thrust bearing;
FIG. 4 is a simplified cross-sectional view of a fault tolerant active magnetic thrust bearing employing the teaching of the present invention; and
FIG. 5 is an enlarged view of a portion of the bearing of FIG. 4 illustrating air gap position and structure.

### DETAILED DESCRIPTION OF THE INVENTION

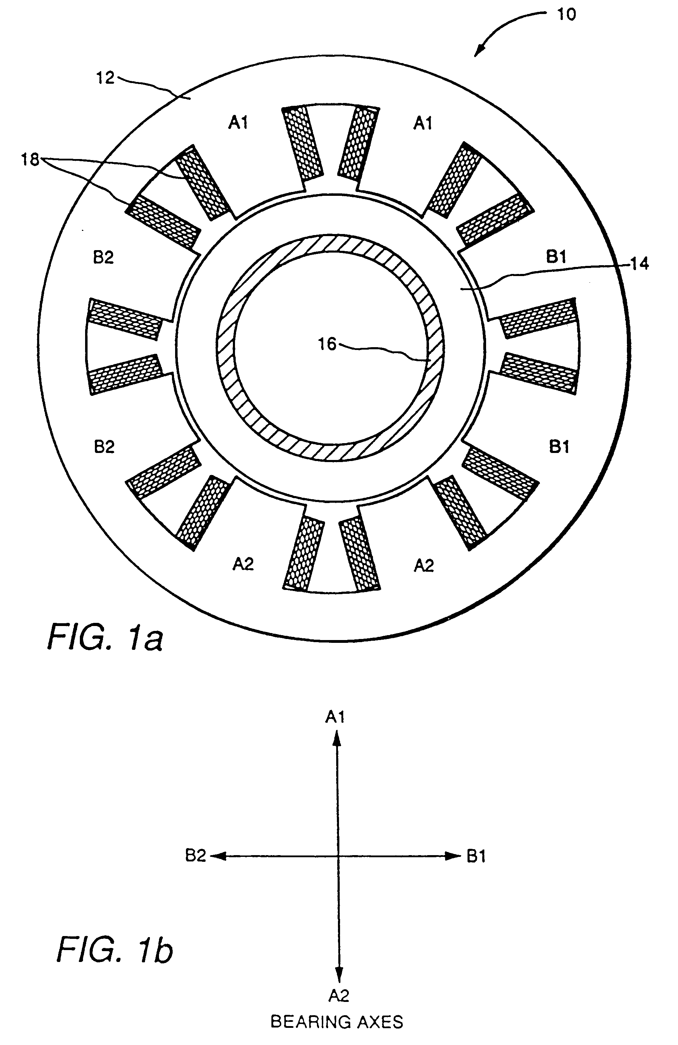

FIG. 1a illustrates a typical active radial magnetic bearing 10 employing orthogonal control axes. Active radial magnetic bearing 10 includes a stator 12 and a rotor 14 coupled to a shaft 16. By way of example, stator 12 is shown as having four stator pole-pairs configured as four force-producing electromagnets A1, A2, B1 and B2, with a 90° radial spacing between pole-pairs. Each stator pole has a winding 18 wound thereon in well-known manner. For example, windings 18 may comprise form-wound windings that are initially wound about a bobbin and then placed on the stator poles during magnetic bearing assembly. Two electromagnets at 180° radial separation operate as a respective one of the control axes. The orthogonal control axes are thus represented graphically in FIG. 1b as A1-A2 and B1-B2. Disadvantageously, in the active magnetic bearing configuration of FIG. 1a, both of the control axes are required to maintain stable rotor suspension.

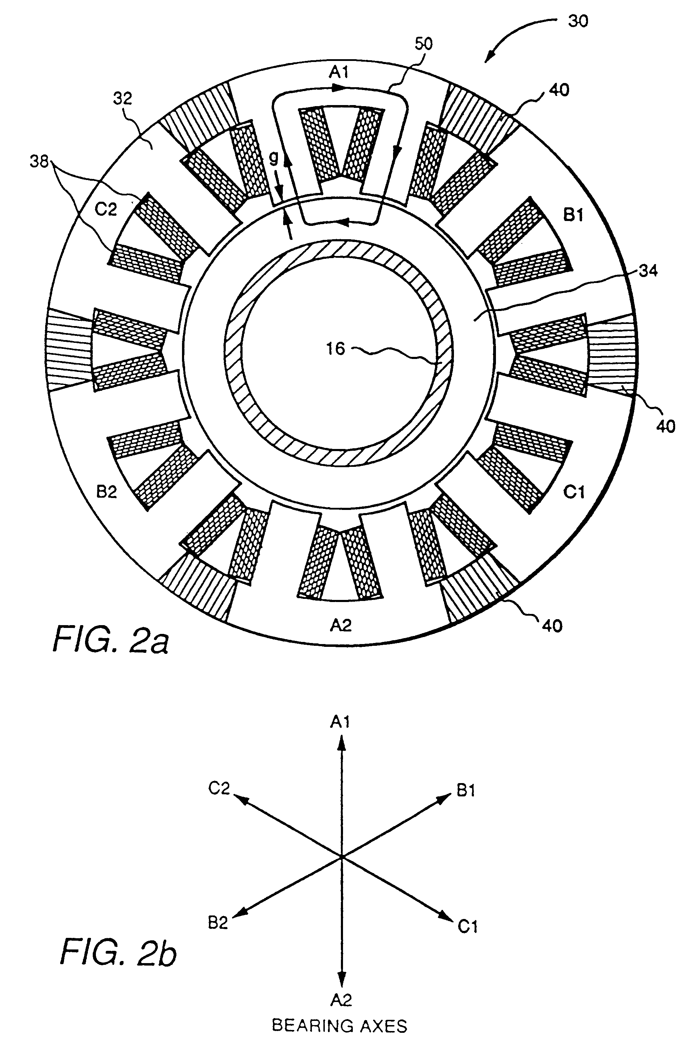

FIG. 2a illustrates an active magnetic bearing 30 employing at least three magnetically isolated radial control axes represented graphically in FIG. 2b. Active magnetic bearing 30 includes a stator 32 and a rotor 34 coupled to a shaft 36. By way of illustration, stator 32 of active magnetic bearing 30 has six stator pole-pairs configured as six force-producing electromagnets A1, B1, C1, A2, B2, and C2, with a 60° radial spacing between pole-pairs. Each stator pole has a winding 38 wound thereon in a well-known manner. Two electromagnets at 180° radial separation operate as a respective one of the control axes.

Stator 32 is segmented by situating a nonmagnetic stator flux barrier 40 between adjacent electromagnets. Stator flux barriers 40 provide magnetic isolation for each electromagnet and thus allow functioning force-actuation electromagnets to continue operating even in such proximity to faulted electromagnets. Advantageously, any two of the three (or more) control axes are sufficient to maintain rotor suspension. Hence, bearing operation continues even in the presence of faults, such as, for example, faulted electromagnets, power electronic shorts, and phase power loss. Even greater fault tolerance may be achieved using more than three control axes.

In operation, the magnetic flux produced by the forcing current or magnetomotive force (mmf) in each pole winding 38 circulates through the stator poles of each respective electromagnet and through the rotor and stator cores, crossing two air gap lengths g. An exemplary magnetic flux path 50 for electromagnet A1 is illustrated in FIG. 2a. Advantageously, the magnetic coupling between adjacent electromagnets is minimized by the active magnetic bearing configuration of FIG. 2a, and the flux path for each electromagnet is isolated, enabling independent operation of the control axes and preventing interference between adjacent electromagnets under fault conditions.

The stator of an active magnetic bearing can be constructed using a stack of composite laminations in a manner such as that described in commonly assigned U.S. Pat. No. 4,918,831 of G.B. Kliman, issued October 20, 1989 and hereby incorporated by reference. Alternatively, the stator of an active magnetic bearing can be constructed by bonding (e.g., welding) solid nonmagnetic segments (such as Inconel or other weldable nonmagnetic alloy) to a stack of laminations in a manner such as that described in commonly assigned U.S. Pat. No. 4,472,651 of D.W. Jones, issued September 18, 1984 and hereby incorporated by reference.

FIG. 2a represents the state of the art in fault tolerant radial magnetic bearings, such as disclosed in the aforementioned U.S. Patent Application S.N. (docket RD-22,353) useful in supporting shafts against radial loads. The present invention is directed to a fault tolerant active magnetic bearing for supporting a rotating shaft or load against axial loading.

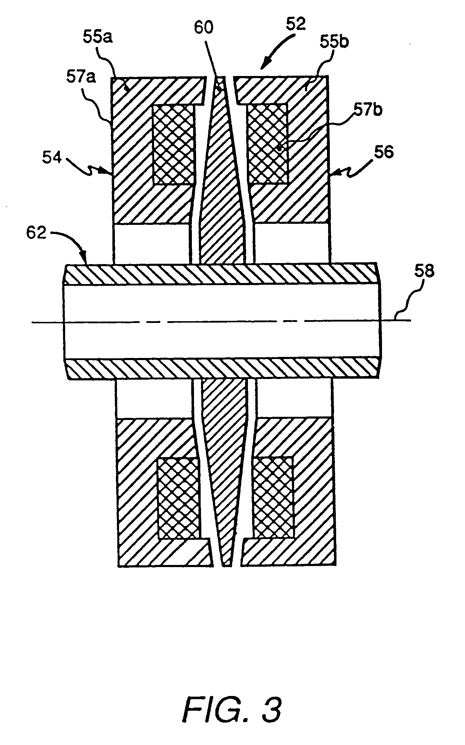

FIG. 3 illustrates a non-fault tolerant active magnetic thrust bearing 52 employing a single control axis. This bearing is comprised of two circular, force-producing stator electromagnets 54 and 56, with symmetry about the axis of control 58, set on two sides of a rotor disc 60 also with symmetry about the axis of control. Disc 60 is attached to rotor 62 which is connected to a thrust type load (not shown). The two electromagnets 54, 56 set on two sides of rotor disc 60 combine to create a single control axis. Both of electromagnets 54, 56 are required to maintain stable rotor thrust control.

Thrust bearing 52 operates on the same magnetic principles as the support bearing of FIG. 1, although the structure is different. Each bearing 54,56 comprises an annular stator 55a,55b having rotor disc facing slots containing electrically energizable windings 57a, 57b. Stator electromagnets 55a,55b and rotor disc 60 are formed of a soft, magnetically permeable material. Stator electromagnets 54,56 extend circumferentially about rotor 62 and generate an electromagnetic field extending generally parallel to axis 58. By appropriately controlling the strength of the fields produced by opposing electromagnets 54 and 56, the rotor disc can be suspended between electromagnets 54, 56 and support rotor 62 against thrust loads. Obviously, if one of the electromagnets 54, 56 loses power, the rotor disc 60 will no longer be suspended between the electromagnets and will crash into the adjacent stator structure.

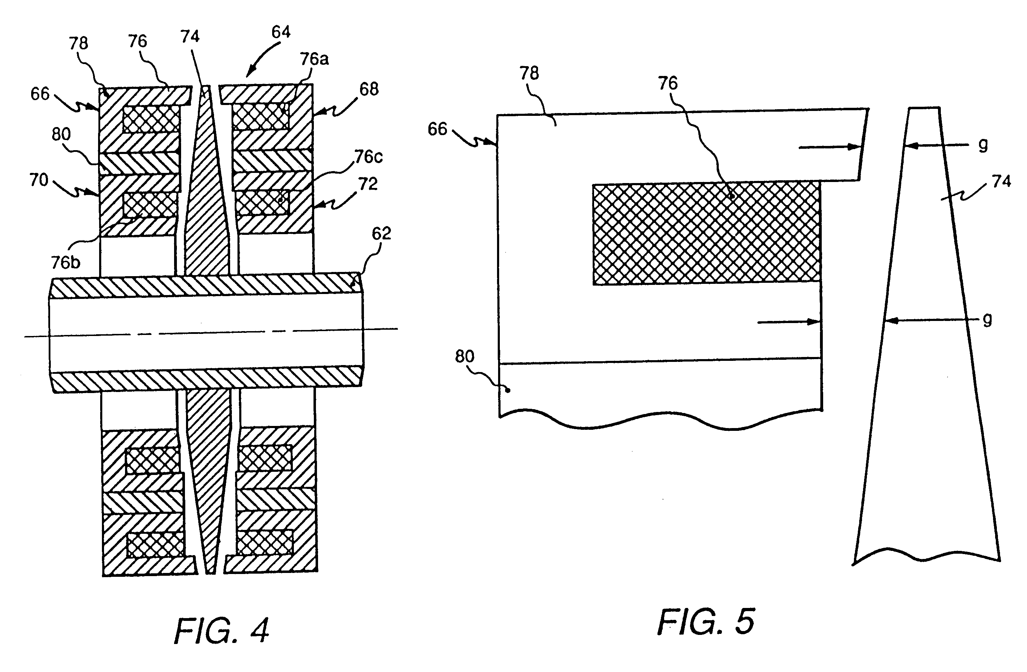

FIG. 4 illustrates a two-axis implementation of a fault tolerant magnetic thrust bearing 64 in accordance with the present invention. Bearing 64 uses two control axes which are made up of four circular, force-producing stator electromagnets 66,68,70 and 72. Two electromagnets, e.g., 66 and 68, are set on two sides of a rotor disc 74 attached to shaft or rotor 62 and combine to create a single control axis.

A second control axis is formed by the two electromagnets 70, 72 set axially opposite each other about disc 74. FIG. 5 is an enlarged sectional view showing how the magnetic flux produced by the forcing current through a winding 76 of electromagnet 66 is coupled to rotor disc 74 at a bearing stator 78 interface with the disc. The magnetic flux traverses two airgaps g between stator 78 and disc 74. Stator 78 is an annular member of a soft, magnetically permeable material (as is bearing rotor 74) having a slot facing rotor 74 for receiving an electrically energizable winding 76. Electromagnets 66-72 are each substantially identically constructed, except for sizing. As shown in FIG. 4, each electromagnet includes a respective, separately energizable winding 76,76a,76b and 76c.

Stator electromagnets 66,70 and 68,72 on opposite sides of rotor disc 74 are separated by nonmagnetic sections 80, such as Inconel or other weldable nonmagnetic alloy, in order to minimize the magnetic coupling between adjacent pole-pairs. Sections 80 can be formed as sleeves positioned in an annular gap between the nested electromagnets 66,70, and 68,72. The magnetic isolation provided by the stator separation will allow non-faulted force-producing stator electromagnets to continue functioning in the proximity of faulted electromagnets. Since any one (or more) control axes are sufficient to maintain stable thrust control, the second control axis provided by electromagnets 68,72 in this magnetic structure provides inherent redundancy and, given appropriate control measures, continued bearing operation in the presence of a variety of faults such as, for example, faulted magnetic poles, power electronic shorts and phase power loss. Greater inherent redundancy/fault tolerance can be readily achieved by adding more than two axes of control.

Electromagnets 66,68,70 and 72 may be controlled from a multiprocessor controller such as that described in the article "A Fault-Tolerant Multiprocessor Controller for Magnetic Bearings" published in the IEEE Micro Journal of Aug., 1988 at pp. 6-17, and authored by S.W. Yates and R.D. Williams of University of Virginia.

While the invention has been described in what is presentlyconsidered to be a preferred embodiment, many variations and modifications will become apparent to those skilled in the art. Accordingly, it is intended that the invention not be limited to the specific illustrative embodiment but be interpreted within the full spirit and scope of the appended claims.

## Claims

1. An active magnetic thrust bearing comprising:
a rotor mounted for rotation about an axis passing axially centrally therethrough;
a rotor disc of magnetically permeable material attached to said rotor and extending radially therefrom;
a first annular electromagnet circumscribing said rotor and juxtaposed with said rotor disc on a first side thereof; and
a second annular electromagnet circumscribing said rotor and juxtaposed with said rotor disc on a second side thereof, said second electromagnet being oriented axially facing said first electromagnet such that magnetic fields produced by said first and second electromagnets are coupled through said rotor disc for suspending said disc between said electromagnets.

2. The active magnetic thrust bearing of claim 1 and including:
a third annular electromagnet positioned between said first electromagnet and said rotor and juxtaposed to said rotor disc; and
a fourth annular electromagnet positioned between said second electromagnet and said rotor and juxtaposed to said rotor disc, said fourth electromagnet being oriented axially facing said third electromagnet, said third and fourth electromagnets being operative to suspend said disc for rotation therebetween.

3. The active magnetic thrust bearing of claim 2 and including a nonmagnetic barrier circumscribing each of said third and fourth electromagnets for magnetically isolating said third and fourth electromagnets from said first and second electromagnets.

4. An active magnetic thrust bearing comprising:
a rotor;
a rotor disc;
a first plurality of annular electromagnets of differing radial dimension each nested one inside another and positioned about said rotor at a preselected airgap distance from a first side of said rotor disc;
a second plurality of annular electromagnets of differing radial dimension each nested one inside another and positioned about said rotor at a preselected airgap distance from a second side of said rotor disc opposite said first side, each electromagnet of said second plurality being positioned axially opposite a corresponding electromagnet of said first plurality, respectively; and defining an independent magnetic control axis for said rotor disc, respectively.

5. The active magnetic thrust bearing of claim 4 and including nonmagnetic sleeve barriers circumscribing each nested electromagnet for magnetically isolating each electromagnet from other electromagnets nested therewith.

6. A method for magnetically supporting a rotating shaft against axially-directed thrust loads, the shaft being formed with a circumscribing, radially-extending disc, the method comprising the steps of:
generating a first magnetic field coupled to the disc at a first selected radius from the shaft, the magnetic field having axially-directed components for suspending the disc generally at a predetermined axial position; and
generating a second magnetic field coupled to the disc at a second selected radius from the shaft and displaced from the first field, the second field having axially-directed components for suspending the rotor generally at the predetermined axial position.

7. The method of claim 6 and including the further step of:
magnetically isolating the first field from the second field.
